# EUROPEAN PATENT APPLICATION

(11) **EP 3 651 338 A1**
(43) Date of publication of application: **13.05.2020**
(21) Application number: 18922097.3
(22) Date of filing: 11.09.2018
(51) Int. Cl.: H02M 7/217, H02J 7/00

(54) **POWER SUPPLY PROVIDING DEVICE AND CHARGING CONTROL METHOD**

(71) Applicant: GUANGDONG OPPO MOBILE TELECOMMUNICATIONS CORP., LTD., Wusha, Chang'an Town Dongguan, Guangdong 523860 (CN)
(72) Inventor: CHIU, Chih-wei, Dongguan Guangdong 523860 (CN)
(74) Representative: Hoffmann Eitle
(86) International application number: PCT/CN2018/105105
(87) International publication number: WO 2020/051775

(57) **Abstract**

A power supply device and a charging control method are provided. The power supply device includes: a transformer; a first conversion circuit, provided at a primary side of the transformer and configured to convert an alternating current provided by a power grid into a pulsating voltage; a second conversion circuit, provided at a secondary side of the transformer and configured to generate an output current of the power supply device; a feedback circuit, configured to generate a feedback signal of the output current; and a switch control unit, configured to control the pulsating voltage according to a power-grid synchronization signal and the feedback signal, such that a waveform of the output current is consistent with a waveform of the power-grid synchronization signal, in which the power-grid synchronization signal is a pulsating signal, and a frequency of the power-grid synchronization signal is n or 1/n times a frequency of the alternating current, n being a positive integer not less than 1. Setting the output current of the power supply device as the pulsating current may reduce a polarization resistance of a battery, prolong a duration of a constant current charging stage, and improve a charging efficiency for the battery.

## Description

### TECHINICAL FIELD

The present disclosure relates to a charging field, and more particularly, to a power supply device and a charging control method

### BACKGROUND

Currently, mobile terminals (e.g., smart phones) are more and more popular with consumers. However, as the mobile terminals consume a large amount of power, they need to be charged frequently. Consequently, the charging efficiency for the battery becomes a hot issue among manufacturers.

### SUMMARY

The present disclosure provides a power supply device and a charging control method, which may improve a charging efficiency for a battery.

A first aspect provides a power supply device. The power supply device includes: a transformer; a first conversion circuit, provided at a primary side of the transformer and configured to convert an alternating current provided by a power grid into a pulsating voltage; a second conversion circuit, provided at a secondary side of the transformer and configured to generate an output current of the power supply device; a feedback circuit, configured to generate a feedback signal of the output current; and a switch control unit, configured to control the pulsating voltage according to a power-grid synchronization signal and the feedback signal, such that a waveform of the output current is consistent with a waveform of the power-grid synchronization signal, in which the power-grid synchronization signal is a pulsating signal, and a frequency of the power-grid synchronization signal is n or 1/n times that of the alternating current, n being a positive integer not less than 1.

A second aspect provides a charging control method. The method includes: converting an alternating current provided by a power grid into a pulsating voltage at a primary side of a transformer; coupling the pulsating voltage to a secondary side of the transformer to generate an output current of the power supply device; and controlling the pulsating voltage according to a power-grid synchronization signal and a feedback signal of the output current, such that a waveform of the output current is consistent with a waveform of the power-grid synchronization signal, in which the power-grid synchronization signal is a pulsating signal, and a frequency of the power-grid synchronization signal is n or 1/n times that of the alternating current, n being a positive integer not less than 1.

Setting the output current of the power supply device as the pulsating current in the pulse form may reduce a polarization resistance of a battery, prolong a duration of a constant current charging stage, and improve a charging efficiency for the battery.

### BRIEF DESCRIPTION OF THE DRAWINGS

Fig. 1 is a schematic diagram of a conventional power supply device.
Fig. 2 is a schematic diagram of a power supply device according to an embodiment of the present disclosure.
Fig. 3 is a schematic diagram of a waveform of an output current of a power supply device according to an embodiment of the present disclosure.
Fig. 4 is a schematic diagram of a power supply device according to another embodiment of the present disclosure.
Fig. 5 is a schematic diagram of a power supply device according to yet another embodiment of the present disclosure.
Fig. 6 is a schematic flowchart of a charging control method according to an embodiment of the present disclosure.

### DETAILED DESCRIPTION

For the sake of understanding, the structure of the conventional power supply device will be briefly described.

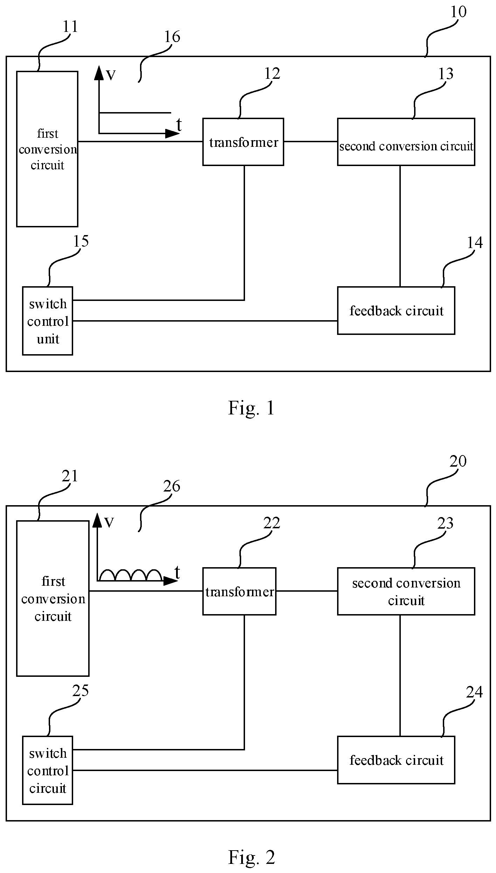

As illustrated in Fig. 1, the conventional power supply device 10 typically includes a first conversion circuit 11, a transformer 12, a second conversion circuit 13, a feedback circuit 14, and a switch control unit 15.

The first conversion circuit 11 is provided at a primary side of the transformer 12. Consequently, sometimes the first conversion circuit 11 may also be referred to as a primary conversion circuit. The first conversion circuit 11 may include a rectifier circuit and a liquid electrolytic capacitor (e.g., a liquid aluminum electrolytic capacitor) for filtering. The rectifier circuit and the liquid electrolytic capacitor may be configured to rectify and filter an alternating current provided by a power grid. Since the liquid electrolytic capacitor has a strong filtering capability, the voltage output from the first conversion circuit 11 is usually a constant voltage. The waveform of the constant voltage is shown at reference numeral 16 in Fig. 1.

The transformer 12 may electromagnetically couple the electric energy from the primary side to a secondary side. The electrical energy coupled to the secondary side may be extracted from the energy of an electrical signal output by the first conversion circuit 11. The way of energy extraction may be adjusted in real time by the switch control unit 15 according to the output of the power supply device 10.

The second conversion circuit 13 is provided at the secondary side of the transformer 12. Consequently, sometimes the second conversion circuit 13 may also be referred to as a secondary conversion circuit. The second conversion circuit 13 may be configured to rectify and/or filter the output voltage at the secondary side of the transformer 12, so as to form the output current of the power supply device 10. Generally, the output current of the conventional power supply device 10 is constant direct current.

The feedback circuit 14 may be configured to generate a feedback signal of the output voltage and/or the output current of the power supply device 10, and to supply the feedback signal to the switch control unit 15.

The switch control unit 15 may control the output voltage and/or the output current of the power supply device 10 by controlling a switching frequency and/or a duty ratio of a switch element (not shown in Fig. 1), such that the output voltage and/or the output current of the power supply device 10 reach desired values. The switch element controlled by the switch control unit 15 may be, for example, a metal oxide semiconductor (MOS) transistor.

In the process of charging the battery with the power supply device 10, since the battery has a polarization impedance, the charging process of the battery is prematurely shifted from a constant current charging stage to a constant voltage charging stage, thereby reducing the charging efficiency of the battery. Reasons for this phenomenon are analyzed as follows.

The charging process of the battery may include a trickle charging stage, the constant current charging stage, and the constant voltage charging stage. The trickle charging stage, which may also be referred to as a pre-charging stage, typically charges the battery with a relatively small current. When the electric quantity (or voltage) of the battery reaches a certain requirement, the constant current charging stage is activated. In the constant current charging stage, the battery may be charged by using a relatively large current. When the voltage across both ends of the battery reaches a charging cut-off voltage of the constant current charging stage, in order to prevent the battery from being overcharged, the constant voltage charging stage needs to be activated to charge the battery slowly until the battery is fully charged (or reaches a preset threshold).

The voltage across both ends of the battery includes not only the actual voltage of the battery (i.e., the true voltage corresponding to the present electric quantity of the battery), but also a "ghost voltage" caused by the polarization impedance of the battery. The higher the polarization resistance of the battery, the higher the "ghost voltage" it causes. When the "ghost voltage" caused by the polarization impedance is high, the charging process of the battery is shifted from the constant current charging stage to the constant voltage charging stage with a low actual voltage across both ends of the battery, thereby resulting in a low charging efficiency of the battery.

Embodiments of the present disclosure provides a power supply device. The output current of the power supply device is not constant direct current, but pulsating current. The pulsating current may reduce the polarization impedance of the battery. The less the polarization impedance is, the longer the duration of the constant current charging stage is, and correspondingly, the higher the charging efficiency of the battery is.

As illustrated in Fig. 2, the power supply device 20 provided in embodiments of the present disclosure may include a first conversion circuit 21, a transformer 22, a second conversion circuit 23, a feedback circuit 24, and a switch control unit 25.

The first conversion circuit 21 is provided at a primary side of the transformer 22. The first conversion circuit 21 may be configured to convert the alternating current provided by the power grid into the pulsating voltage. For example, the liquid electrolytic capacitor having a high filtering capability at the primary side may be removed, so that the voltage output from the first conversion circuit 21 is the pulsating voltage.

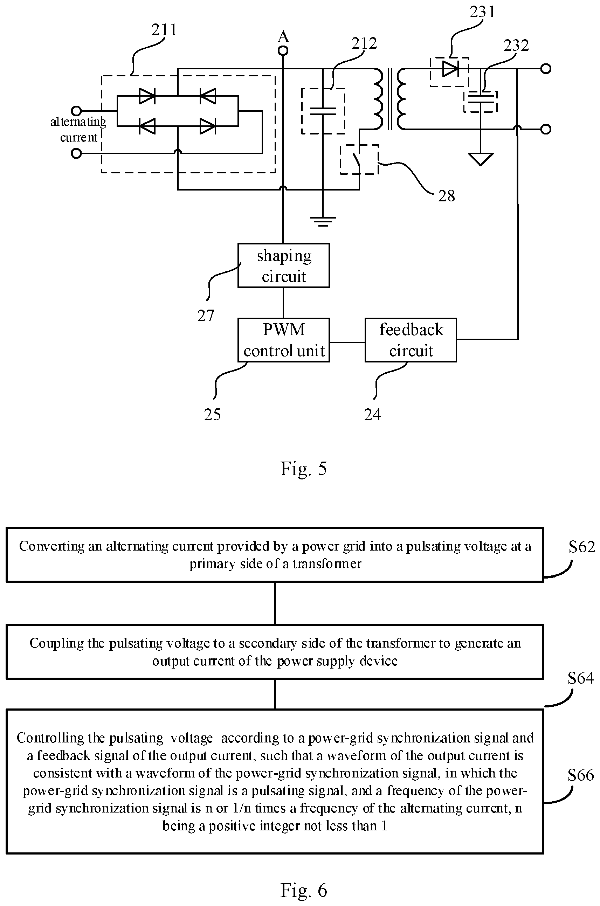

Fig. 5 illustrates one possible implementation of the first conversion circuit 21. As illustrated in Fig. 5, the first conversion circuit 21 may include a rectifier circuit 211 and one or more capacitors 212 (e.g., multilayer ceramic capacitors) with a small filtering capability. In Fig. 5, a full-bridge rectifier circuit is taken as an example of the rectifier circuit 211. However, embodiments of the present disclosure are not limited thereto. The rectifier circuit in the first conversion circuit 21 may be a half-bridge rectifier circuit or another type of rectifier circuit. The capacitor 212 may be configured to filter out glitches of the voltage output by the rectifier circuit 211, thereby improving the signal quality. Alternatively, in some embodiments, the first conversion circuit 21 may also merely include the rectifier circuit 211 and not include any capacitive element.

Fig. 2 shows, at reference numeral 26, a waveform of the pulsating voltage output from the first conversion circuit 21. Comparing the voltage waveform at reference numeral 16 in Fig. 1 with the voltage waveform at reference numeral 26 in Fig. 2, the effect of the removal of the liquid electrolytic capacitor on the voltage waveform output by the first conversion circuit 21 may be observed. The removal of the liquid electrolytic capacitor may reduce the volume of the power supply device 20. In addition, the liquid electrolytic capacitor has a short service life and is easy to explode, so that the removal of the liquid electrolytic capacitor may also prolong the service life of the power supply device 20 and improve the safety of the power supply device 20.

The transformer 22 may be a conventional transformer or may be an isolation transformer capable of electrically isolating the primary and secondary sides. The transformer 22 may electromagnetically couple the electric energy from the primary side to the secondary side. The electrical energy coupled to the secondary side may be extracted from the electrical energy of the electrical signal output by the first conversion circuit 21. The way of energy extraction may be adjusted in real time by the switch control unit 25 according to the output of the power supply device 20.

The second conversion circuit 23 is provided at the secondary side of the transformer 22. The second conversion circuit 23 may be configured to generate an output current of the power supply device 20 according to the electric energy coupled from the primary side to the secondary side of the transformer 22.

Fig. 5 illustrates one possible implementation of the second conversion circuit 23. As illustrated in Fig. 5, the second conversion circuit 23 may include a rectifier circuit 231 and a filter circuit 232.

The rectifier circuit 231 may be, for example, a synchronous rectifier circuit. The rectifier circuit 231 may be implemented using a diode or a synchronous rectifying chip.

The filter circuit 232 typically employs one or more capacitors in parallel that each has a relatively low filtering capability. The filter capacitor 232 is mainly configured to filter out the glitches of the voltage output by the rectifier circuit 231, thereby improving the quality of the output current of the power supply device 20. Alternatively, in some embodiments, the filter circuit 232 may be removed, and only the rectifier circuit 231 is saved.

The feedback circuit 24 may be configured to generate a feedback signal of the output current of the power supply device 20. The specific form of the feedback circuit 24 is not limited in the embodiments of the present disclosure, as long as the feedback circuit 24 may detect the output current of the power supply device 20 in real time, and may provide the feedback signal to the switch control unit 25 timely when the output current of the power supply device 20 deviates from the desired output current. The feedback circuit 24 may be a voltage feedback circuit composed of a voltage detection circuit, an operational amplifier and other elements, a current feedback circuit composed of a current detection circuit, an operational amplifier and other elements, or a combination of a voltage feedback circuit and a current feedback circuit.

The feedback circuit 24 may send the feedback signal directly to the control unit 25. In some embodiments, the feedback circuit 24 may also send the feedback signal to the control unit 25 through an optocoupler, so as to enhance isolation between the primary and secondary sides of the transformer 22.

The switch control unit 25 may be configured to perform control (sometimes also referred to as modulation, chopping control, or chopping modulation) on the pulsating voltage (i.e., the voltage output by the first conversion circuit 21) according to a power-grid synchronization signal and the feedback signal provided by the feedback circuit 24, such that the waveform of the output current of the power supply device 20 (or the envelope of the waveform of the output current) is consistent with the waveform of the power-grid synchronization signal.

The output current of the power supply device 20 may change with the power-grid synchronization signal, which means that the input current at the primary side may also change with the power-grid synchronization signal. Further, the power-grid synchronization signal may be synchronized with the pulsating voltage output by the first conversion circuit 21 (or the input voltage at the primary side). In other words, the power-grid synchronization signal changes with the pulsating voltage. Therefore, in this case, the input voltage at the primary side and the input current at the primary side may keep synchronized with each other. Since the power factor (PF) of the entire system is related to a phase difference between the input voltage and the input current, the smaller the phase difference between the input voltage and the input current is, the higher the power factor of the entire system is. Therefore, the power supply device 20 provided by this embodiment of the present disclosure has a higher power factor.

The switch control unit 25 may be controlled in various ways. For example, the output current of the power supply device 20 may be controlled by a conventional peak current method or an average current method. Implementations of the peak current method and the average current method are well known by those skilled in the art, and will not be described in detail herein.

Fig. 5 illustrates one possible implementation of the switch control unit 25. As illustrated in Fig. 5, the switch control unit 25 may be a pulse width modulation (PWM) control unit. The PWM control unit 25 may be a current-type PWM control unit. The current-type PWM control unit may transmit a PWM signal obtained by the peak current method or the average current method to a switch element 28, thereby controlling the on/off of the switch element 28.

The above-mentioned power-grid synchronization signal refers to a signal having a signal frequency n or 1/n times a frequency of the alternating current provided by the power grid, in which n may be a positive integer not less than 1. In other words, the power-grid synchronization signal refers to a signal having a signal frequency that is an integer multiple or a reciprocal of the integer multiple of the frequency of the alternating current provided by the power grid. For example, the frequency of the power-grid synchronization signal may be twice the frequency of the alternating current provided by the power grid. Since the waveform of the output current of the power supply device 20 is consistent with the waveform of the power-grid synchronization signal, the waveform of the output current of the power supply device 20 may also follow the frequency of the alternating current provided by the power grid (i.e., the frequency of the waveform of the output current of the power supply device 20 is also an integer multiple or a reciprocal of the integer multiple of the frequency of the alternating current provided by the power grid).

The power-grid synchronization signal may be a periodic signal with a minimum value of 0, or a periodic signal with a minimum value less than 0 (i.e., a negative value). Accordingly, the output current of the power supply device 20 may be a periodic signal with a minimum value of 0, or a periodic signal with a minimum value less than 0 (i.e., a negative value).

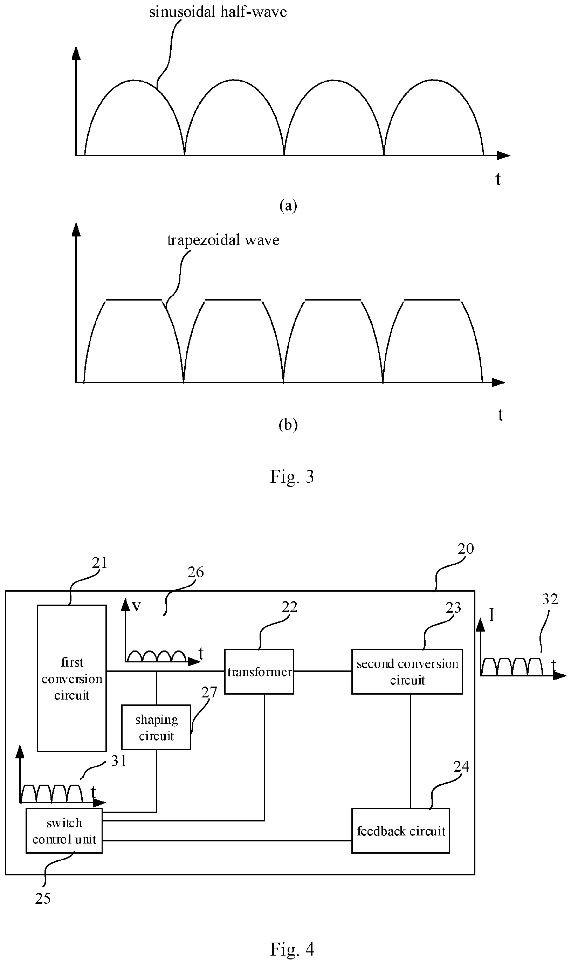

The waveform of the power-grid synchronization signal in one cycle may be a sinusoidal half-wave as illustrated in (a) of Fig. 3; and accordingly, the waveform of the output current of the power supply device 20 in one cycle is also the sinusoidal half-wave as illustrated in (a) of Fig. 3. In other embodiments, the waveform of the power-grid synchronization signal in one period may be a trapezoidal wave as illustrated in (b) of Fig. 3; and accordingly, the waveform of the output current of the power supply device 20 in one cycle may also be the trapezoidal wave as illustrated in (b) of Fig. 3.

The peak value of the sinusoidal half-wave in one cycle occurs at one point, and an included angle between two adjacent sinusoidal half-waves is relatively large, which results in a relatively low effective value of the output current of the power supply device 20. In one cycle, the peak value of the waveform of the trapezoidal wave does not occur at only one point but in a segment. In other words, the trapezoidal wave will remain at the peak of the waveform for a period of time during one cycle. Compared with the sinusoidal half-wave whose peak value is simply at one point, if the output current of the power supply device 20 is controlled to be a trapezoidal wave, not only the characteristic that the output current of the power supply device 20 is the pulsating current is maintained, but also the effective value of the output current is increased, thereby further improving the charging efficiency of the battery.

The power-grid synchronization signal may be obtained in various ways. For example, it may be directly intercepted from the primary side of the transformer, or may be generated in other ways.

Referring to Fig. 4, the method for obtaining the power-grid synchronization signal is illustrated by taking the power-grid synchronization signal being a trapezoidal wave as an example.

As illustrated in Fig. 4, the power supply device 20 may further include a shaping circuit 27. The shaping circuit 27 may be configured to obtain an original synchronization signal from an output end of the first conversion circuit 21; to obtain the power-grid synchronization signal by shaping the original synchronization signal; and to transmit the power-grid synchronization signal to the switch control unit 25.

In the embodiment of Fig. 4, since the shaping circuit 27 intercepts the original synchronization signal from the output end of the first conversion circuit 21, the waveform of the original synchronization signal is the same as that shown at reference numeral 26. The waveform of the original synchronization signal in one cycle is also a sinusoidal half-wave. The shaping circuit 27 may shape the waveform of the original synchronization signal according to actual needs. For example, the shaping circuit 27 may shape the waveform of the original synchronization signal into a waveform shown at reference numeral 31, i.e., a trapezoidal wave. Since the waveform of the output current of the power supply device 20 is consistent with the waveform of the power-grid synchronization signal, the waveform of the output current of the power supply device 20 is also a trapezoidal wave as shown by the reference numeral 32. The trapezoidal wave may increase the effective value of the output current of the power supply device 20.

Fig. 5 illustrates an example of the way in which the shaping circuit 27 intercepts the original synchronization signal from the power grid. As illustrated in Fig. 5, the original synchronization signal may be intercepted at an output end A of the rectifier circuit 211.

Alternatively, in some embodiments, the original synchronization signal may not be shaped and may be directly used as the power-grid synchronization signal.

Alternatively, in some embodiments, the waveform of the original synchronization signal may be shaped into any other shape according to actual needs, so that the waveform of the output current of the power supply device 20 may be transformed into the waveform in any other shape. Furthermore, on the basis of any of the foregoing embodiments, the switch control unit 25 may also control the switch element to stop for several switch cycles (e.g., control the switch to enter a skip mode), so that the waveform of the output current of the power supply device 20 may be developed into a new waveform in another form.

Sometimes, the above-mentioned power supply device 20 may also be referred to as a converter or a switch power supply. The topology of the power supply device 20 may be any one of a flyback topology, a forward topology, a half bridge topology and a full bridge topology, which is not limited in this embodiment. The power supply device 20 may employ a unipolar power supply. The input and output signals of the unipolar power supply without the electrolytic capacitor have good following performance, so that a total harmonic distortion of the system may be reduced, and the power factor of the system may be improved.

Device embodiments of the present disclosure are described in detail above in combination with Figs. 1 to 5, and method embodiments of the present disclosure are described in detail below in combination with Fig. 6. It should be understood that the description of the method embodiments corresponds to the description of the device embodiments, and thus for parts not described in detail, reference may be made to the foregoing device embodiments.

Fig. 6 is a schematic flowchart of a charging control method according to an embodiment of the present disclosure. The method of Fig. 6 includes blocks S62 to S66.

At block S62, an alternating current provided by a power grid is converted into a pulsating voltage at a primary side of a transformer.

At block S64, the pulsating voltage is coupled to a secondary side of the transformer to generate an output current of the power supply device.

At block S66, the pulsating voltage is controlled according to a power-grid synchronization signal and a feedback signal of the output current, such that a waveform of the output current is consistent with a waveform of the power-grid synchronization signal. The power-grid synchronization signal is a pulsating signal, and a frequency of the power-grid synchronization signal is n or 1/n times a frequency of the alternating current, n being a positive integer not less than 1.

Alternatively, the waveform of the power-grid synchronization signal in one cycle is trapezoidal.

Alternatively, the method of Fig. 6 may further include: obtaining an original synchronization signal from an output end of the first conversion circuit, the first conversion circuit being provided at the primary side and configured for converting the alternating current into the pulsating voltage; and obtaining the power-grid synchronization signal by shaping the original synchronization signal.

Alternatively, the method of Fig. 6 may further include: generating the power-grid synchronization signal by adjusting the waveform of the pulsating voltage.

Alternatively, a minimum value of the output current of the power supply device is less than or equal to 0.

Alternatively, the power-grid synchronization signal is synchronized with the pulsating voltage.

Alternatively, the output current of the power supply device changes with the power-grid synchronization signal.

Alternatively, the power supply device is a unipolar power supply.

Alternatively, the pulsating voltage is controlled based on a PWM control unit.

In several embodiments provided by the present disclosure, it should be understood that, the system, device and method disclosed can be realized in any other manner. For example, the device embodiments described above can be merely exemplary, for example, the units are just divided according to logic functions. In practical implementation, the units can be divided in other manners, for example, multiple units or components can be combined or integrated into another system, or some features can be omitted or not executed. In addition, the mutual coupling or direct coupling or communication connection described or discussed can be via some interfaces, and indirect coupling or communication connection between devices or units may be electrical, mechanical or of other forms.

The units illustrated as separate components can be or not be separated physically, and components described as units can be or not be physical units, i.e., can be located at one place, or can be distributed onto multiple network units. It is possible to select some or all of the units according to actual needs, for realizing the objective of embodiments of the present disclosure.

In addition, respective functional units in respective embodiments of the present disclosure can be integrated into one processing unit, or can be present as separate physical entities. It is also possible that two or more than two units are integrated into one unit.

The foregoing descriptions are merely specific embodiments of the present disclosure, and the protection scope of the present disclosure is not limited thereto. In the technical scope disclosed by the present disclosure, any person skilled in the art can easily conceive of changes or alternatives, which are within the protection scope of the present disclosure. Therefore, the protection scope of the present disclosure shall be subject to the protection scope of the attached claims.

## Claims

1. A power supply device, comprising:
a transformer;
a first conversion circuit, provided at a primary side of the transformer and configured to convert an alternating current provided by a power grid into a pulsating voltage;
a second conversion circuit, provided at a secondary side of the transformer and configured to generate an output current of the power supply device;
a feedback circuit, configured to generate a feedback signal of the output current; and
a switch control unit, configured to control the pulsating voltage according to a power-grid synchronization signal and the feedback signal, such that a waveform of the output current is consistent with a waveform of the power-grid synchronization signal, in which the power-grid synchronization signal is a pulsating signal, and a frequency of the power-grid synchronization signal is n or 1/n times a frequency of the alternating current provided by the power grid, n being a positive integer not less than 1.

2. The power supply device according to claim 1, wherein a waveform of the power-grid synchronization signal in one cycle is trapezoidal.

3. The power supply device according to claim 1 or 2, further comprising:
a shaping circuit, configured to obtain an original synchronization signal from an output end of the first conversion circuit; to obtain the power-grid synchronization signal by shaping the original synchronization signal; and to transmit the power-grid synchronization signal to the switch control unit.

4. The power supply device according to any one of claims 1 to 3, wherein a minimum value of the output current is less than or equal to 0.

5. The power supply device according to any one of claims 1 to 4, wherein the power-grid synchronization signal is synchronized with the pulsating voltage.

6. The power supply device according to any one of claims 1 to 5, wherein the output current changes with the power-grid synchronization signal.

7. The power supply device according to any one of claims 1 to 6, wherein the power supply device is a unipolar power supply.

8. The power supply device according to any one of claims 1 to 7, wherein the switch control unit is a pulse width modulation PWM control unit.

9. A charging control method, comprising:
converting an alternating current provided by a power grid into a pulsating voltage at a primary side of a transformer;
coupling the pulsating voltage to a secondary side of the transformer, to generate an output current of a power supply device; and
controlling the pulsating voltage according to a power-grid synchronization signal and a feedback signal of the output current, such that a waveform of the output current is consistent with a waveform of the power-grid synchronization signal, in which the power-grid synchronization signal is a pulsating signal, and a frequency of the power-grid synchronization signal is n or 1/n times a frequency of the alternating current provided by the power grid, n being a positive integer not less than 1.

10. The method according to claim 9, wherein a waveform of the power-grid synchronization signal in one cycle is trapezoidal.

11. The method according to claim 9 or 10, further comprising:
obtaining an original synchronization signal from an output end of a first conversion circuit, the first conversion circuit being provided at the primary side and configured to convert the alternating current into the pulsating voltage; and
obtaining the power-grid synchronization signal by shaping the original synchronization signal.

12. The method according to any one of claims 9 to 11, wherein a minimum value of the output current is less than or equal to 0.

13. The method according to any one of claims 9 to 12, wherein the power-grid synchronization signal is synchronized with the pulsating voltage.

14. The method according to any one of claims 9 to 13, wherein the output current changes with the power-grid synchronization signal.

15. The method according to any one of claims 9 to 14, wherein the power supply device is a unipolar power supply.

16. The method according to any one of claims 9 to 15, wherein the pulsating voltage is controlled based on a pulse width modulation PWM control unit.
